# EUROPÄISCHE PATENTSCHRIFT

(11) **EP 0 839 360 B1**
(45) Veröffentlichungstag und Bekanntmachung des Hinweises auf die Patenterteilung: **20.08.2003**
(21) Anmeldenummer: 96920698.6
(22) Anmeldetag: 26.06.1996
(51) Int. Cl.: G06K 19/077

(54) **Verfahren und Vorrichtung zur Herstelliung eines IC-Kartenmoduls**
Method and device for producing an IC-card module
Procédé et dispositif pour la fabrication d'un module de carte à puce

(30) Priorität: 17.07.1995 DE 19525933
(43) Veröffentlichungstag der Anmeldung: 06.05.1998
(73) Patentinhaber: Finn, David, 87629 Füssen-Weissensee (DE); Rietzler, Manfred, 87616 Marktoberdorf (DE)
(72) Erfinder: Finn, David, 87629 Füssen-Weissensee (DE); Rietzler, Manfred, 87616 Marktoberdorf (DE)
(74) Vertreter: Böck, Bernhard, Dipl.-Ing.
(86) Internationale Anmeldenummer: DE9601121
(87) Internationale Veröffentlichungsnummer: WO97004415

(56) Entgegenhaltungen:
- EP-A- 0 689 164
- WO-A-93/20537
- WO-A-94/22111
- WO-A-95/26538
- DE-A- 4 311 493

## Beschreibung

Die vorliegende Erfindung betrifft ein Verfahren zur Herstellung eines IC-Kartenmoduls nach dem Oberbegriff des Anspruchs 1 und eine Vorrichtung zur Herstellung eines IC-Kartenmoduls nach Anspruch 4.

IC-Karten, die beispielsweise im bargeldlosen Zahlungsverkehr Verwendung finden, bestehen im allgemeinen aus einem sogenannten "IC-Kartenmodul", mit einer etwa aus einem Filmträger gebildeten Trägerschicht und einer darauf angeordneten Transpondereinheit mit einer als Antenne wirkenden Spule und zumindest einem IC, sowie darauf beidseitig aufgebrachten Decklaminatschichten, die beispielsweise als Werbeträger oder auch zur Bildidentifikation des Kartenbesitzers dienen.

Aus der EP 0 481 776 A2 ist ein IC-Kartenmodul bekannt, das auf einem Filmträger eine Spulenstruktur aufweist, die neben einem IC mit weiteren elektronischen Bauelementen bestückt ist. Grundsätzlich besteht die Möglichkeit, eine derartige Spulenstruktur durch Aufbringen einer entsprechend formierten Metallisierung, beispielsweise elektrogalvanisch oder im Ätzverfahren, oder durch eine Wickelspule zu erzeugen, die mit ihren Wickeldrahtwindungen auf die Trägerschicht aufgebracht wird. Zwar weisen die erstgenannten Metallisierungsverfahren den Vorteil auf, daß sich verfahrensinhärent eine Haftung zwischen der Trägerschicht und der Spulenstruktur ergibt, jedoch sind die bekannten Verfahren sehr aufwendig in ihrer Durchführung und erfordern entsprechend aufwendige Betriebseinrichtungen zu deren Herstellung. Bei Verwendung einer Wickelspule zur Herstellung eines derartigen IC-Kartenmoduls erweist es sich als nachteilig, daß neben der Applikation der Spule auf der Trägerschicht in einem gesonderten Verfahrensschritt noch für eine Verbindung der Spule mit der Trägerschicht gesorgt werden muß, um das die Trägerschicht und die Spule aufweisende IC-Kartenmodul als eine Einheit bei der Fertigung von IC-Karten nutzen zu können.

Aus der DE,A,44 10 732 ist ein Verfahren zur Herstellung eines IC-Kartenmoduls bekannt, bei dem die Anordnung einer Drahtspule auf einer thermoplastischen Trägerschicht durch Verlegung des Drahts auf der Trägerschicht mit zumindest stellenweiser Einbettung des Drahts in die Trägerschicht erfolgt.

Aus der WO,A,94/22 111 ist ein Verfahren zur Herstellung einer IC-Karte bekannt, bei dem eine Wickelspule zwischen zwei Materiallagen angeordnet und vollständig in den beiden Materiallagen eingebettet wird.

Der vorliegenden Erfindung liegt die Aufgabe zugrunde, ein IC-Kartenmodul sowie ein Verfahren und eine Vorrichtung zu dessen Herstellung vorzuschlagen, das bzw. die die Herstellung eines IC-Kartenmoduls vereinfacht.

Diese Aufgabe wird durch ein Verfahren zur Herstellung eines IC-Kartenmoduls mit den Merkmalen des Anspruchs 1 sowie eine Vorrichtung zur Herstellung eines IC-Kartenmoduls mit den Merkmalen des Anspruchs 4 gelöst.

Bei dem erfindungsgemäßen Verfahren zur Herstellung eines IC-Kartenmoduls gemäß dem Anspruch 1 wird die Spule nach Herstellung auf einem Wickelwerkzeug mittels diesem unter Einwirkung von Temperatur in die Trägerschicht eingedrückt, so daß eine Übergabe der fertig gewickelten Spule vom Wickelwerkzeug zu einer separaten Applikationseinrichtung zur Applikation der Spule auf der Trägerschicht entfällt und eine unmittelbare Übergabe der Wickelwerkzeug auf die Trägerschicht möglich ist.

Die Verbindung der Spule mit dem Wickelwerkzeug wird besonders leicht ausführbar, wenn die Spule nach ihrer Herstellung auf dem Wickelwerkzeug mittels eines parallel zur Spulenebene angeordneten Wickeldrahtanlageelements des Wickelwerkzeugs in die Trägerschicht eingedrückt wird, und eine Rückstellbewegung eines das Wickeldrahtanlageelement aufnehmenden Wickelkerns erfolgt.

Die Rückstellbewegung oder das Zurückweichen des Wickelkerns während der Spulenapplikation auf der Trägerschicht verhindert eine Beschädigung oder Verformung der Trägerschicht durch den Wickelkern.

Die Rückstellbewegung des Wickelkerns kann durch eine entsprechende Zustellbewegung der Trägerschicht bewirkt werden.

Die erfindungsgemäße Vorrichtung zur Herstellung eines IC-Kartenmoduls weist ein beheizbares Wickelwerkzeug mit einem Wickelkern und einem darauf angeordneten Wickeldrahtanlageelement sowie eine Trägerschichtandrückeinrichtung mit einer Aufnahmeebene zur flächigen, bezogen auf das Wickeldrahtanlageelement parallelen Anordnung der Trägerschicht auf, wobei die Trägerschichtandrückeinrichtung gegen das Wickeldrahtanlageelement oder umgekehrt und der Wickelkern relativ zum Wickeldrahtanlageelement bewegbar sind.

Um eine Beschädigung der thermoplastischen Trägerschicht besonders in dem Fall zu vermeiden, wenn die Rückstellbewegung des Wickelkerns durch die Trägerschicht bzw. durch die darunter angeordnete Trägerschichtandrückeinrichtung bewirkt wird, kann der Wickelkern zumindest im Bereich seiner der Trägerschichtandrückeinrichtung zugewandten Stirnfläche thermisch isolierend ausgebildet sein.

Eine derartige, im wesentlichen thermisch bedingte, Beschädigung der Trägerschicht läßt sich auch vermeiden, wenn der Wickelkern eine gegenüber seiner Querschnittsfläche verkleinerte Stirnfläche aufweist. Dies kann beispielsweise durch eine konkave Ausbildung des entsprechenden Endes des Wickelkerns erreicht werden, so daß die Stirnfläche im wesentlichen aus einer Kreisringfläche besteht. Beide vorstehend genannten Maßnahmen zum thermischen Schutz der Trägerschicht können natürlich auch miteinander kombiniert werden.

Als besonders vorteilhaft erweist es sich, wenn die Trägerschichtandrückeinrichtung mit einer Vakuumeinrichtung versehen ist, um ein Haften der Trägerschicht auf der Aufnahmeebene zu bewirken.

Ein Schutz der Trägerschicht vor thermischer Überbelastung läßt sich auch dadurch erreichen, daß die Trägerschichtandrückeinrichtung aus einem Material mit hoher Wärmeleitfähigkeit gebildet ist.

Auch besteht die Möglichkeit, den Wickelkern und/oder die Trägerschichtandrückeinrichtung mit einer Kühleinrichtung zu versehen.

Nachfolgend wird das erfindungsgemäße IC-Kartenmodul sowie das erfindungsgemäße Verfahren zur Herstellung eines IC-Kartenmoduls und eine dabei verwendbare erfindungsgemäße Vorrichtung anhand der Zeichnungen näher erläutert. Es zeigen:
- **Fig. 1**: ein IC-Kartenmodul mit einer auf einer Trägerschicht angeordneten Transpondereinheit aus einer Spule und einem IC;
- **Fig. 2**: eine Teilschnittdarstellung des in **Fig. 1** dargestellten IC-Kartenmoduls längs dem Schnittlinienverlauf II-II;
- **Fig. 3**: die Darstellung einer Verfahrensvariante zur Herstellung eines IC-Kartenmoduls mit einem Wickelwerkzeug in Wickelkonfiguration;
- **Fig. 4**: das in **Fig. 3** dargestellte Wickelwerkzeug in einer Applikations-Konfiguration vor Übertragung der Wickelspule auf die Trägerschicht;
- **Fig. 5**: das Wickelwerkzeug bei Applikation der Wickelspule auf die Trägerschicht;
- **Fig. 6**: eine Draufsicht auf ein Wickeldrahtanlageelement des Wickelwerkzeugs.

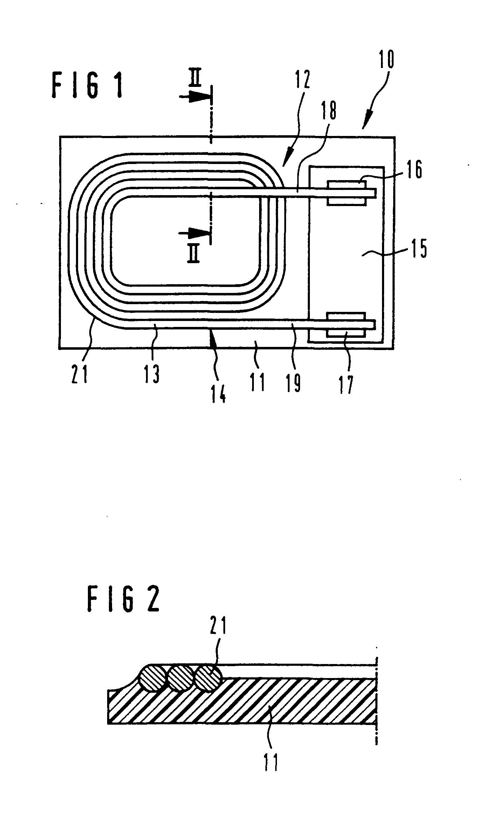

**Fig. 1** zeigt ein IC-Kartenmodul 10 mit einer Trägerschicht 11 und einer darauf angeordneten Transpondereinheit 12. Die Transpondereinheit 12 besteht bei dem hier dargestellten Ausführungsbeispiel aus einer aus Wickeldraht 13 hergestellten Wickelspule 14, deren Wickeldrahtenden 18, 19 mit Anschlußflächen 16, 17 eines ICs 15 verbunden sind.

Wie **Fig. 2** zeigt, ist die Oberfläche der Trägerschicht 11 im Bereich von Spulenwindungen 21 plastisch verformt, wobei eine Haftung zwischen der Spule 14 und der Trägerschicht 11 aus einem thermoplastischen Material, wie PVC oder Polycarbonat, gegeben ist. Dabei sind die Spulenwindungen 21 praktisch in die Oberfläche der Trägerschicht 11 eingedrückt und es wird eine Klebewirkung erzielt.

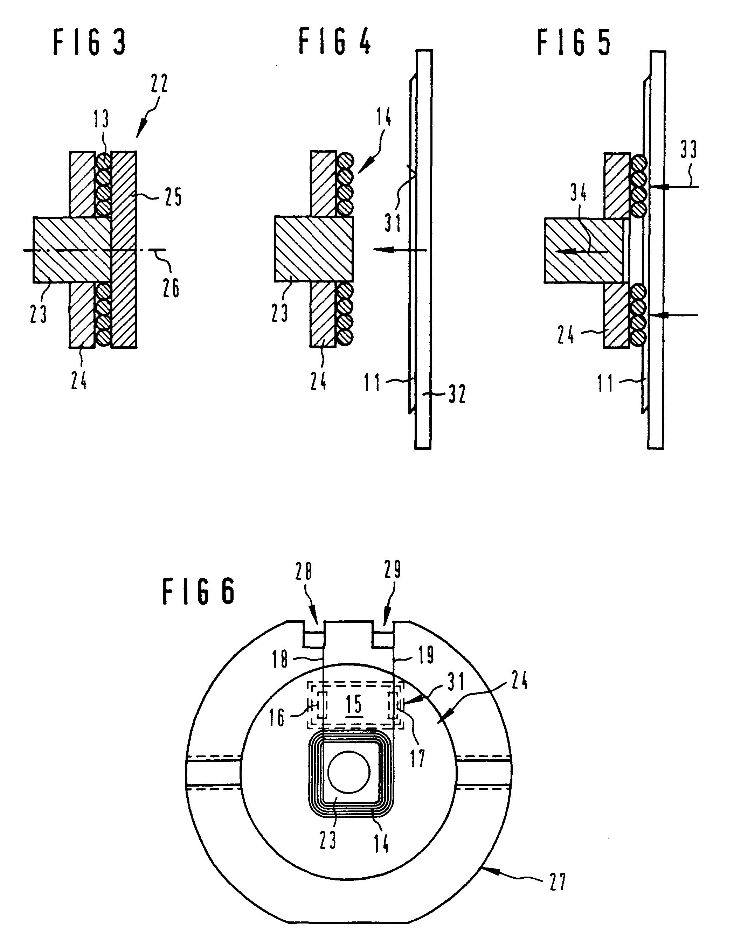

Anhand der **Fig. 3, 4** und **5** wird nachfolgend beispielhaft eine Verfahrensvariante zur Herstellung des in den **Fig. 1** und **2** dargestellten IC-Kartenmoduls 10 mit einer dabei verwendbaren Vorrichtung erläutert.

**Fig. 3** zeigt in stark schematisierter Darstellung ein Wickelwerkzeug 22, das einen Wickelkern 23 mit einem darauf angeordneten Wickeldrahtanlageelement 24 und einem Gegenhalter 25 aufweist. Der Wickelkern 23 bildet somit zusammen mit dem Wickeldrahtanlageelement 24 und dem Gegenhalter 25 eine Wickelmatrize, die durch Rotation um eine Wickelachse 26 infolge einer entsprechenden Aufwickelbewegung des Wickeldrahts 13 die Ausbildung der Wickeldrahtspule 14 ermöglicht.

Während der Herstellung der Wickelspule 14 ist der Gegenhalter 25 mit dem Wickelkern 23 verbunden, um die in **Fig. 3** dargestellte geordnete Ausbildung der Spulenwindungen 21 zu ermöglichen. Bei Herstellung einer hochfrequenten, aus Wickeldraht mit relativ großem Durchmesser (ca. 150 µm) gewickelten und nur wenige Spulenwindungen 21 aufweisenden Wickelspule 14 kann, insbesondere bei Beheizung des Wickelwerkzeugs 22 oder des Wickeldrahts 13 zur Erzielung einer Haftung zwischen den Backlackoberflächen der Spulenwindungen 21, auf den Gegenhalter 25 verzichtet werden.

**Fig. 6** verdeutlicht in einer Draufsicht auf das Wickeldrahtanlageelement 24 des Wickelwerkzeugs 22 die Ausbildung der Wickelspule 14 nach Beendigung des Wickelvorgangs und die Möglichkeit, das Wickeldrahtanlageelement 24 neben der Ausbildung der Wickelspule 14 gleichzeitig auch zur Herstellung der gesamten Transpondereinheit 12 zu nutzen.

Hierzu ist das Wickeldrahtanlageelement 24 an seinem Umfangsrand 27 mit zwei Halteeinrichtungen 28, 29 versehen, die zur klemmenden Aufnahme der Wickeldrahtenden 18, 19 vor bzw. nach Beendigung des eigentlichen Wickelvorgangs dienen. Hierzu wird vor Beginn des Wickelvorgangs zunächst das Wickeldrahtende 18 mittels eines geeigneten, hier nicht näher dargestellten Drahtführers durch die Halteeinrichtung 28 geführt und dort geklemmt. Anschließend erfolgt die Ausbildung der Wickelspule 14 durch Rotation des Wickelwerkzeugs 22 um die Wickelachse 26, wobei der Wickeldraht 13 aus dem Drahtführer herausgeführt wird. Nach Erreichen der gewünschten Windungsanzahl wird schließlich das zweite Wickeldrahtende 19 mittels Hindurchführens des Drahtführers durch die zweite Halteeinrichtung 29 geklemmt, so daß sich die in **Fig. 6** dargestellte Konfiguration einstellt.

Im Wickeldrahtanlageelement 24 befindet sich eine Aufnahmeeinrichtung 30 zur Aufnahme des ICs 15, derart, daß die Anschlußflächen 16, 17 des ICs 15 sich in einer Überdeckungslage mit den Wickeldrahtenden 18, 19 befinden. Der IC 15 kann entweder vor dem Wickelvorgang in das Wickeldrahtanlageelement 24 eingelegt werden oder nach dem Wickelvorgang von hinten durch die etwa als Durchgangsöffnung gestaltete Aufnahmeeinrichtung 30 mit seinen Anschlußflächen 16, 17 gegen die Wickeldrahtenden 18 bzw. 19 geschoben werden. Mittels eines nicht näher dargestellten Verbindungswerkzeugs kann dann eine Verbindung der Wickeldrahtenden 18, 19 mit den Anschlußflächen 16, 17 sowie ein Durchtrennen der Wickeldrahtenden 18, 19 zwischen den Anschlußflächen 16, 17 und den Halteeinrichtungen 28, 29 erfolgen.

Derart im Wickeldrahtanlageelement 24 aufgenommen, kann dann die aus der Wickelspule 14 und dem IC 15 gebildete Transpondereinheit 12, wie in **Fig. 4** dargestellt, gegebenenfalls nach Entfernung des Gegenhalters 25, in der Applikations-Konfiguration des Wickelwerkzeugs 22 auf der Trägerschicht 11, die sich auf einer Aufnahmeebene 31 einer Trägerschichtandrückeinrichtung 32 angeordnet befindet, appliziert werden.

Hierzu wird die Trägerschicht 11, die als Endlosfilm an der Trägerschichtandrückeinrichtung 32 vorbeilaufend oder als Bogen mit IC-Kartenabmessung ausgebildet sein kann, mittels der Trägerschichtandrückeinrichtung 32, wie durch den Pfeil 33 in **Fig. 4** angedeutet, unter Zwischenlage der Wickelspule 14 bzw. der Transpondereinheit 12 gegen das Wickeldrahtanlageelement 24 gedrückt. Je nach dem Verformungsverhalten des thermoplastischen Trägerschichtmaterials kann eine Beheizung des Wickeldrahtanlageelements 24 oder des Wickeldrahts 13 erfolgen, um die plastische Verformung der Oberfläche der Trägerschicht 11, wie in **Fig. 2** dargestellt, unter Druck- und Temperatureinwirkung zu ermöglichen.

Auch **Fig. 5** zeigt, entsprechend der Darstellung in **Fig. 2**, wie die Spulenwindungen 21 der Wickelspule 14 bei der Spulenapplikation zumindest teilweise in die Oberfläche der Trägerschicht 11 eingedrückt werden. Um zu verhindern, daß durch einen Kontakt des Wickelkerns 23 mit der Trägerschicht 11 diese deformiert oder gar zerstört wird, erfolgt mit der Andrückbewegung (Pfeil 33) der Trägerschichtandrückeinrichtung 32 eine Rückstellbewegung (Pfeil 34) des relativ zum Wickeldrahtanlageelement 24 bewegbaren Wickelkerns 23.

## Patentansprüche

1. Verfahren zur Herstellung eines IC-Kartenmoduls mit einer thermoplastischen Trägerschicht und einer darauf angeordneten Spule, **dadurch gekennzeichnet, daß** die Spule (14) nach Herstellung auf einem Wickelwerkzeug (22) unter Einwirkung von Temperatur mittels diesem zumindest teilweise in die Trägerschicht (11) eingedrückt wird.

2. Verfahren nach Anspruch 1,
**dadurch gekennzeichnet,**
**daß** die Spule (14) mittels eines parallel zur Spulenebene angeordneten Wickeldrahtanlageelements (24) des Wickelwerkzeugs (22) in die Trägerschicht (11) eingedrückt wird, wobei eine Rückstellbewegung (34) eines das Wickeldrahtanlageelement (24) aufnehmenden Wickelkerns (23) erfolgt.

3. Verfahren nach Anspruch 2,
**dadurch gekennzeichnet,**
**daß** die Rückstellbewegung (34) des Wickelkerns (23) durch eine Zustellbewegung (33) der Trägerschicht (11) bewirkt wird.

4. Vorrichtung zur Herstellung eines IC-Kartenmoduls mit einer Trägerschicht und einer darauf angeordneten Spule,
**gekennzeichnet durch**
ein beheizbares Wickelwerkzeug (22) mit einem Wickelkern (23) und einem darauf angeordneten Wickeldrahtanlageelement (24) sowie einer Trägerschichtandrückeinrichtung (32) mit einer Aufnahmeebene (31) zur flächigen, bezogen auf das Wickeldrahtanlageelement (24), parallelen Anordnung der Trägerschicht (11), wobei die Trägerschichtandrückeinrichtung (32) gegen das Wickeldrahtanlageelement (24) oder umgekehrt und der Wickelkern (23) relativ zum Wickeldrahtanlageelement (24) bewegbar sind.

5. Vorrichtung nach Anspruch 4,
**dadurch gekennzeichnet,**
**daß** der Wickelkern (23) zumindest im Bereich seiner der Trägerschichtandrückeinrichtung (32) zugewandten Stirnfläche thermisch isolierend ausgebildet ist.

6. Vorrichtung nach Anspruch 4,
**dadurch gekennzeichnet,**
**daß** der Wickelkern (23) eine gegenüber seiner Querschnittsfläche verkleinerte Stirnfläche aufweist.

7. Vorrichtung nach einem oder mehreren der Ansprüche 4 bis 6,
**dadurch gekennzeichnet,**
**daß** die Trägerschichtandrückeinrichtung (32) zum Halten der Trägerschicht (11) mit einer Vakuumeinrichtung versehen ist.

8. Vorrichtung nach einem oder mehreren der Ansprüche 4 bis 7,
**dadurch gekennzeichnet,**
**daß** die Trägerschichtandrückeinrichtung (32) aus einem Material mit hoher Wärmeleitfähigkeit gebildet ist.

9. Vorrichtung nach einem oder mehreren der Ansprüche 4 bis 8,
**dadurch gekennzeichnet,**
**daß** der Wickelkern (23) und/oder die Trägerschichtandrückeinrichtung (32) mit einer Kühleinrichtung versehen sind.

## Claims

1. Method for producing an IC card module having a thermoplastic carrier layer and a coil arranged thereon, **characterised in that** the coil (14), after having been produced on a winding tool (22), is pressed under the influence of temperature by means of said winding tool at least in part into the carrier layer (11).

2. Method according to claim 1, **characterised in that** the coil (14) is pressed into the carrier layer (11) by means of a winding-wire installing element (24) of the winding tool (22) that is arranged so as to be parallel to the coil plane, with a restoring movement (34) of a winding core (23), which receives the winding-wire installing element (24), taking place.

3. Method according to claim 2, **characterised in that** the restoring movement (34) of the winding core (23) is effected by means of an advancing movement (33) of the carrier layer (11).

4. Device for producing an IC card module having a carrier layer and a coil arranged thereon, **characterised by** a heatable winding tool (22) having a winding core (23) and a winding-wire installing element (24) which is arranged thereon and also a carrier-layer pressing device (32) that has a receiving plane (31) for the planar arrangement of the carrier layer (11) parallel to the winding-wire installing element (24), with the carrier-layer pressing device (32) being movable towards the winding-wire installing element (24) or *vice versa,* and with the winding core (23) being movable in relation to the winding-wire installing element (24).

5. Device according to claim 4, **characterised in that** the winding core (23) is formed at least in the region of its end face that faces the carrier-layer pressing device (32) so as to be thermally insulating.

6. Device according to claim 4, **characterised in that** the winding core (23) has an end face which is reduced in size in relation to its cross-sectional area.

7. Device according to one or more of the claims 4 to 6, **characterised in that** the carrier-layer pressing arrangement (32) is provided with a vacuum arrangement for the purpose of holding the carrier layer (11).

8. Device according to one or more of the claims 4 to 7, **characterised in that** the carrier-layer pressing device (32) is formed from a material that has a high level of thermal conductivity.

9. Device according to one or more of the claims 4 to 8, **characterised in that** the winding core (23) and/or the carrier-layer pressing device (32) are/is provided with a cooling device.

## Revendications

1. Procédé de fabrication d'un module de cartes de circuits intégrés avec une couche porteuse thermoplastique et une bobine disposée sur celle-ci, **caractérisé en ce que** la bobine (14), après fabrication sur un outil de bobinage (22), est enfoncée au moyen de celui-ci sous l'effet de la température au moins partiellement dans la couche porteuse (11).

2. Procédé selon la revendication 1,
**caractérisé en ce que**,
la bobine (14) est enfoncée dans la couche porteuse (11) au moyen d'un élément de l'installation du fil de bobinage (24) de l'outil de bobinage (22), élément disposé parallèlement au plan de la bobine, moyennant quoi a lieu un mouvement de rappel (34) d'un axe de bobinage (23) recevant l'élément de l'installation du fil de bobinage (24).

3. Procédé selon la revendication 2,
**caractérisé en ce que**,
le mouvement de rappel (34) de l'axe de bobinage (23) est provoqué par un mouvement d'avance (33) de la couche porteuse (11).

4. Dispositif de fabrication d'un module de cartes de circuits intégrés avec une couche porteuse et une bobine disposée sur celle-ci,
**caractérisé en ce que**,
un outil de bobinage (22), pouvant être chauffé, avec un axe de bobinage (23) et un élément de l'installation du fil de bobinage (24) disposé sur celui-ci, ainsi qu'un dispositif de pression de la couche porteuse (32) avec un plan de réception (31) pour la configuration parallèle en nappe, par rapport à l'élément de l'installation du fil de bobinage (24), de la couche porteuse (11), le dispositif de pression de la couche porteuse (32) pouvant être déplacé contre l'élément de l'installation du fil de bobinage (24) ou l'inverse, et l'axe de bobinage (23) étant mobile par rapport à l'élément de l'installation du fil de bobinage (24).

5. Dispositif selon la revendication 4,
**caractérisé en ce que**,
l'axe de bobinage (23) présente une isolation thermique au moins dans la zone de sa surface frontale tournée vers le dispositif de pression de la couche porteuse (32).

6. Dispositif selon la revendication 4,
**caractérisé en ce que**,
l'axe de bobinage (23) présente une surface frontale réduite par rapport à sa superficie de section.

7. Dispositif selon l'une ou plusieurs des revendications 4 à 6,
**caractérisé en ce que**,
le dispositif de pression de la couche porteuse (32) est doté d'un dispositif à vide pour le maintien de la couche porteuse (11).

8. Dispositif selon l'une ou plusieurs des revendications 4 à 7,
**caractérisé en ce que**,
le dispositif de pression de la couche porteuse (32) est formé d'un matériau à conductibilité thermique élevée.

9. Dispositif selon l'une ou plusieurs des revendications 4 à 8,
**caractérisé en ce que**,
l'axe de bobinage (23) et/ou le dispositif de pression de la couche porteuse (32) est/sont équipé(s) d'un dispositif de refroidissement.
